(19) Europäisches Patentamt
European Patent Office
Office européen des brevets

(11) EP 2 615 135 A1

(12) EUROPEAN PATENT APPLICATION

(43) Date of publication:
**17.07.2013 Bulletin 2013/29**

(51) Int Cl.:
***C08L 23/10*** *(2006.01)*

(21) Application number: **12000187.0**

(22) Date of filing: **13.01.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Borealis AG**
**1220 Vienna (AT)**

(72) Inventors:
- **Klimke, Katja**
  **4020 Linz (AT)**
- **Bernreitner, Klaus**
  **4010 Linz (AT)**
- **Jarzombek, Manfred**
  **4040 Linz (AT)**

(74) Representative: **Kador, Utz Ulrich**
**Kador & Partner**
**Corneliusstrasse 15**
**80469 München (DE)**

# (54) Soft heterophasic polyolefin composition having low content of p-xylene solubles and hexane solubles

(57) The present invention relates to a heterophasic propylene polymer composition, comprising a matrix comprising a propylene homo- and/or copolymer, and an elastomeric ethylene/alpha-olefin phase dispersed in the matrix, the heterophasic propylene polymer composition comprising monomer units derived from an oligomeric diene compound, having a p-xylene cold soluble fraction (XCS) of less than 45 wt.%, determined at 23 °C according to ISO 6427, a MFR (2.16 kg, 230 °C, ISO 1133) of more than 1.0 to 15 g/10min., a flexural modulus, determined according to according to ISO 178 of not more than 500 MPa, and a relationship between flexural modulus (FM) and the p-xylene cold soluble fraction (XCS) of the composition fulfilling the following equation: FM [MPa] + 13.3 [MPa/wt.%] * XCS [wt.%] < 800 [MPa]. The present invention further relates to a process for the production of the heterophasic propylene polymer composition and its use for extrusion, injection moulding, blow moulding, injection stretch blow moulding, cast film extrusion, blown film extrusion or thermoforming.



Printed by Jouve, 75001 PARIS (FR)

## Description

The present invention relates to a heterophasic polyolefin composition comprising a matrix comprising a propylene homo- and/or copolymer and an elastomeric alpha-olefin copolymer phase dispersed in the matrix having improved impact strength and excellent impact/flexibility balance and a low amount of the hexane extractable fraction and a low amount of the p-xylene soluble fraction. The present invention further relates to a process for the preparation of such a heterophasic polyolefin composition, articles made therefrom and uses of the heterophasic polyolefin composition.

There is an increasing trend in the food packaging industry to use plastic containers for food. Typical food containers such as pouches have a multilayer structure with at least one layer comprising polyolefins such as polyethylene or polypropylene, adhesives, barrier and external layers. It is desired that the polyolefin material imparts flexibility as well as high impact strength to the final packaging material. In addition, the polymers should comply with legal requirements about safety standards, e.g. FDA regulations in terms of the amount of hexane solubles and p-xylene solubles.

The same trend, i.e. increased use of polyolefin materials, is seen in the medical packaging industry as well. Again, the polymer should impart sufficient flexibility as well as high impact strength to the final packaging material. For medical applications, the material must also comply with pharmacopoeia regulations.

It is known that impact strength of polypropylene can be improved by dispersing a rubber phase within the polymer matrix, thereby obtaining a heterophasic polypropylene composition. Such a material is also called "impact-modified polypropylene".

EP 2 154 195 A1 relates to a heterophasic polymer composition having an MFR (230 °C, 2.16 kg) of less than 8 g/10 min, comprising monomer units derived from a compound having at least two double bonds, the composition comprising a matrix comprising a propylene homo- and/or copolymer, and an elastomeric ethylene/$C_3$-$C_{12}$ alpha-olefin phase dispersed in the matrix. The p-xylene cold soluble fraction (XCS) of the heterophasic polymer composition amounts to more than 5 wt% of the composition and has an amount of $C_3$-$C_{12}$ alpha-olefin-derived monomer units of at least 60 wt%. The heterophasic polymer composition has high seal strength after being subjected to a sterilization treatment, while simultaneously maintaining impact strength on a high level. This is achieved using a reactive modification step which leads to increased levels of hexane solubles in the composition compared to unmodified compositions.

EP 2 048 185 A1 discloses a propylene polymer composition preferably having a tensile modulus below 230 MPa, comprising a polypropylene (A), an elastomeric copolymer (B) of ethylene and at least one $C_3$-$C_8$ alpha-olefin comonomer, and an ethylene $C_2$ to $C_8$ alkyl acrylate copolymer (C), wherein the composition has a $SHI_{3.0/2.5}$ of at least 0.5 at a Hencky strain rate of 3 $s^{-1}$ and said composition is preferably chemically modified by at least one bifunctionally unsaturated monomer (D') and/or at least one multifunctionally unsaturated low molecular weight polymer (D"). A thermally decomposing free radical-forming agent such as a peroxide may be further added. The bifunctionally or multifunctionally unsaturated monomer and the thermally decomposing free radical-forming agent are preferably added as a masterbatch to the mixture of components (A), (B) and (C) in a modifying step, followed by an extrusion step. The concentration of the masterbatch was kept at 0.3 wt% or lower, based on the weight of the total mixture. The desired soft touch feeling could be achieved if using ethylene butyl acrylate (EBA) as the component (C). Heterophasic polypropylene compositions for moulding applications should exhibit good flowablilty, a good impact/stiffness balance and a low level of hexane extractables. It is known that increasing the flowability (e.g. via post-reactor peroxide treatment which is also called visbreaking) usually results in an increase of hexane extractables and a decrease of the stiffness due to the oxidative degradation of the polypropylene matrix. Especially in the case of heterophasic polypropylenes having a propylene-rich elastomeric phase, peroxide treatment also affects the impact strength in a negative way by degradation of the polymer chains in the elastomeric phase.

For certain applications such as e.g. BFS (blow-fill-seal) bottles or medical application films, heterophasic polypropylene compositions are required to also combine rather low stiffness (high flexibility), high flowability and excellent impact properties. In order to produce soft random heterophasic polypropylene, the rubber content has to be very high (around 50 wt-% as measured via the p-xylene cold soluble content (XCS)) which means they do not comply with certain national regulations for food and drug applications, e.g. FDA limits the XCS content in plastic materials for food and drug applications to not more than 30 wt-%. The high XCS content also results in a high content of hexane solubles which in turn means the materials do not comply with other regulations such as the pharmacopoeia for medical applications. Some prior art such as EP 2 154 195 A1 has shown that a reactive modifying step can reduce the total amount of p-xylene solubles in the composition but instead increases the level of hexane solubles.

Other strategies for decreasing the hexane soluble content in heterophasic polypropylene concentrate are changing the catalyst recipe in order to produce less hexane-soluble material directly in-reactor (e.g. US2022-0137860A1, USRE31331E and US2011-0034634A1).

There is still a need for improved propylene polymer compositions being suitable for food and drug applications, medical application films or technical application films, where the compositions are required to have excellent processability, high flexibility, high impact strength, especially at low temperatures, excellent impact/flexibility balance and low content of hexane and p-xylene extractables, independent of the type of plant, process or catalyst composition. Such

propylene polymer compositions are desirably produced by a relatively simple and inexpensive process. There is particularly the need for propylene polymer compositions being suitable for moulding applications.

The present invention is based on the finding that the above object can be achieved by a heterophasic polyolefin composition, comprising a matrix comprising a propylene homo- and/or copolymer, and an elastomeric ethylene/alpha-olefin phase dispersed in the matrix, the heterophasic polyolefin composition comprising monomer units derived from an oligomeric diene compound, and
having a p-xylene cold soluble fraction (XCS) of less than 45 wt.%, determined at 23 °C according to ISO 6427,
a MFR (2.16 kg, 230 °C, ISO 1133) of more than 1.0 to 15 g/10min, determined according to ISO 1133,
a flexural modulus, determined according to according to ISO 178 of not more than 500 MPa, and
a relationship between flexural modulus (FM) and the p-xylene cold soluble fraction (XCS) of the composition fulfilling the following inequation:

$$FM\ [MPa] + 13.3\ [MPa/wt.\%] * XCS\ [wt.\%] < 800\ [MPa].$$

The present invention further relates to a process for the production of the above heterophasic propylene polymer composition, comprising the steps of:

(i) providing an unmodified intermediate heterophasic propylene polymer composition which comprises a matrix comprising a propylene homo- and/or copolymer, and an elastomeric ethylene/ alpha-olefin phase dispersed in the matrix; and
(ii) melt mixing the unmodified intermediate heterophasic propylene polymer composition of step (i) with a peroxide masterbatch composition and an oligomeric diene masterbatch composition in a melt mixing device at a barrel temperature in the range of 170 to 300 °C.

The term "heterophasic polyolefin composition" used herein denotes compositions consisting of an olefin polymer matrix resin and an elastomeric olefin polymer dispersed in said matrix resin.

The term "intermediate heterophasic polyolefin composition" signifies a heterophasic polyolefin composition which is obtained by a polymerization reaction and which will subsequently be subjected to a post-reactor processing step as explained in the present invention.

"Catalyst" denotes the organometallic compound containing the reaction centre of the polymerisation.

"Catalyst system" denotes the mixture of the catalyst, the optional cocatalyst and the optional support.

"Visbreaking" denotes subjecting a polymer resin to peroxide treatments in the absence of a bifunctionally unsaturated molecule such as a diene.

In the present invention, the term "matrix" is to be interpreted in its commonly accepted meaning, i.e. it refers to a continuous phase (in the present invention a continuous polymer phase) in which isolated or discrete particles such as rubber particles may be dispersed. The propylene homo- or copolymer is present in such an amount, that it can form a continuous phase which can act as a matrix.

The matrix phase can be made of the propylene homo- and/or copolymer only but can also comprise additional polymers, in particular polymers which can be blended homogeneously with the propylene homo- or copolymer and together form a continuous phase which can act as a matrix. In a preferred embodiment, at least 80 wt% of the matrix, more preferably at least 90 wt%, even more preferably at least 95 wt% of the matrix is made of the propylene homo- and/or copolymer. The matrix may even consist of the propylene homo- and/or copolymer.

Preferably, the propylene homo- and/or copolymer constituting the matrix has a melt flow rate MFR (230 °C, 2.16 kg) of less than 30 g/10min, more preferably within the range of 0.5 to 30 g/10 min, more preferably within the range of 1 to 20 g/10min, yet more preferably within the range of 1 to 10 g/10min

Preferably, the propylene homo- or copolymer constituting the matrix is made with a Ziegler-Natta catalyst.

According to one embodiment, the polypropylene constituting the matrix has a rather broad molecular weight distribution (MWD), more preferably the polypropylene is multimodal, even more preferably bimodal. "Multimodal" or "multimodal distribution" describes a probability distribution that has several relative maxima. In particular, the expression "modality of a polymer" refers to the form of its molecular weight distribution (MWD) curve, i.e. the appearance of the graph of the polymer weight fraction as a function of its molecular weight. If the polymer is produced in a sequential step process, i.e. by utilizing reactors coupled in serial configuration, and using different conditions in each reactor, the different polymer fractions produced in the different reactors each have their own molecular weight distribution which may considerably differ from one another. The molecular weight distribution curve of the resulting final polymer can be seen as super-imposing of molecular weight distribution curves of the individual polymer fractions which will, accordingly, show distinct maxima, or at least be distinctively broadened compared with the curves for individual fractions. A polymer

showing such molecular weight distribution curve is called bimodal or multimodal, respectively.

The polypropylene constituting the matrix can be multimodal, e.g. bimodal. If the polypropylene constituting the matrix is multimodal (e.g. bimodal), it preferably has a molecular weight distribution (MWD) of 5 to 60, more preferably in the range of 7 to 25. However, it is also possible to use a monomodal polypropylene. If used, it preferably has an MWD of 3 to 8, more preferably 4 to 7.

The propylene homo- or copolymer constituting the matrix may be produced by a single- or multistage process polymerisation of propylene or propylene with alpha-olefin and/or ethylene such as bulk polymerisation, gas phase polymerisation, solution polymerisation or combinations thereof using conventional catalysts. A homo- or copolymer can be made either in loop reactors or in a combination of loop and gas phase reactors. Those processes are well known to one skilled in the art.

In addition to the polypropylene matrix defined above, the heterophasic polymer composition of the present invention comprises an elastomeric ethylene/alpha-olefin phase dispersed in the matrix.

As used in the present invention, the term "elastomeric" corresponds to the commonly accepted meaning and refers to a rubber-like polymeric material of more or less amorphous nature.

The elastomeric copolymer is dispersed within the propylene polymer matrix, i.e. it does not form a continuous phase but is rather present as separated areas distributed throughout the polypropylene constituting the matrix.

Preferably, the elastomeric ethylene/ alpha-olefin is an ethylene/propylene rubber, which may additionally comprise $C_4$-$C_{12}$ alpha-olefin monomer units.

In a preferred embodiment, the elastomeric ethylene/ alpha-olefin phase has an amount of propylene-derived monomer units of 30 to 95 wt.%, preferably 50 to 95 wt.%, more preferably 60 to 94 wt.%, yet more preferably 70 to 92 wt.%. The amount of co-monomer units being ethylene and/or $C_4$-$C_{12}$ alpha-olefin is 5 to 70 wt.%, preferably 5 to 50 wt.%, more preferably 6 to 40 wt.%, still more preferably 8 to 30 wt.%.

More preferably, the ethylene/alpha-olefin rubber phase is an ethylene/propylene rubber, wherein the amount of ethylene-derived co-monomer units is within the above ranges.

Preferably, the elastomeric ethylene/ alpha-olefin phase is present in an amount of at least 20 wt.%, more preferably at least 30 wt.%, even more preferably at least 35 wt.%, based on the weight of the heterophasic polymer composition. Preferably, said rubber phase is present in an amount within the range of 20 wt.% to 70 wt.%, more preferably 30 wt.% to 60 wt.%, even more preferably 35 wt.% to 60 wt.%, based on the weight of the heterophasic polymer composition.

In principle, the heterophasic polymer composition may additionally comprise one or more elastomeric ethylene/$C_3$-$C_{12}$ alpha-olefin phases (i.e. in total two or more ethylene/$C_3$ to $C_{12}$ alpha-olefin rubber phases) wherein at least one of these rubber phases may have less than 60 wt.% of $C_3$ to $C_{12}$ alpha-olefin derived monomer units, preferably less than 50 wt.%, more preferably in the range of from 10-50 wt.%, even more preferably in the range of from 15-40 wt.%, e.g. in the range of from 20-35 wt.%.

However, if so, the total amount of $C_3$ to $C_{12}$ alpha-olefin derived monomer units in the dispersed rubber phases should still be in such a range as to result in a hexane extractable fraction of the heterophasic polymer composition which has an amount of not more than 16 wt.-%, preferably not more than 15 wt.%, even more preferably not more than 14 wt.%, based on the total weight of the heterophasic propylene polymer composition. The meaning of the parameter "hexane extractable fraction" will be discussed below in further detail.

The intermediate heterophasic polyolefin composition preferably has a MFR (230 °C, 2.16 kg) of less than 10 g/10min, more preferably within the range of 0.1 to less than 10 g/10 min. Preferably, the intermediate heterophasic polyolefin composition has an MFR (230 °C, 2.16 kg) of 0.1 to 8 g/10 min or even more preferably of 0.3 to 8 g/10 min, e.g. in the range of 0.3 to 6 g/10min. The total comonomer content of the intermediate heterophasic polyolefin composition, being the sum of ethylene and $C_4$-$C_{12}$ alpha-olefin present in said composition, is in the range of 5 to 25 wt.%, preferably in the range of 8 to 22 wt.%, most preferably in the range of 9 to 20 wt.%.

The heterophasic polyolefin composition can be fractionated into a p-xylene cold soluble part (XCS) mostly comprising the elastomeric ethylene/ alpha-olefin phase and a p-xylene insoluble part (XU) mostly comprising the crystalline propylene homo- or copolymer constituting the matrix.

The relative amount of the p-xylene cold soluble part (XCS) in the intermediate heterophasic polyolefin composition is preferably in the range of from 20 to 70 wt.%, preferably in the range of from 30 to 60 wt.%, more preferably in the range of from 30 to 55 wt.%.

The amount of the co-monomer units, preferably ethylene units in the p-xylene cold soluble part (XCS) is preferably in the range of from 5 to 70 wt.%, more preferably 10 to 50 wt.%, more preferably 15 to 40 wt.%, like in the range of 15 to 35 wt.% and amount of the co-monomer units, preferably ethylene units in the p-xylene insoluble part (XU) is below 8.0 wt.%, preferably below 6.0 wt.%.

The heterophasic polyolefin composition preferably contains a hexane extractable fraction in an amount of not more than 16 wt.%, more preferably not more than 15 wt.%, especially preferably not more than 14 wt.%, measured as described in the examples section. These surprisingly low ranges with good impact properties and low stiffness enable

to comply with pharmacopoeia regulations and national food and drug regulations. Therefore, the heterophasic polyolefin composition according to the present invention is particularly suitable for the manufacture of medical application films.

Modifiers and additives may be added to the polypropylene composition as occasion demands. Preferably, the modifiers are selected from poly-1-butene and poly-4-methylpentene-1. Suitable additives include stabilizers, lubricants, nucleating agents, pigments and foaming agents. These modifiers and/or additives may be included during the polymerisation process or after the polymerisation by melt mixing. It is however preferred that the modifiers do not negatively affect the desirable properties of the composition as discussed above.

If the elastomeric polymer is prepared separately from the polypropylene constituting the matrix, it can be subsequently blended with the matrix polymer by any conventional blending means, e.g. melt blending in an extruder.

Alternatively, the elastomeric ethylene/alpha olefin phase can be prepared as a reactor blend together with the propylene homo- and/or copolymer constituting the matrix, e.g. starting with the production of the matrix polymer in a loop reactor and optionally a gas phase reactor, followed by transferring the product into one or more gas phase reactors, where the elastomeric polymer is polymerised.

A suitable catalyst for the polymerisation of the heterophasic propylene polymer composition is any stereospecific catalyst for propylene polymerisation which is capable of polymerising and copolymerising propylene and comonomers at a temperature of 40 to 110 °C and at a pressure from 10 to 100 bar. Ziegler-Natta catalysts (especially a high yield Ziegler-Natta system containing Ti, Cl, Mg and Al) are suitable catalysts.

The catalyst for producing the unmodified intermediate heterophasic propylene polymer composition may be a Ziegler-Natta catalyst. If a Ziegler-Natta catalyst is used it may be e.g. an inorganic halide (e.g. $MgCl_2$) supported titanium catalyst, together with an aluminium alkyl (e.g. triethylaluminium) cocatalyst. Silanes, e.g. dicyclopentanedimethoxysilane (DCPDMS), cyclohexylmethyl-dimethoxysilane (CHMDMS) or diethylaminotriethoxysilane, may be used as external donors. Such catalyst systems are described in EP 0 491 566 A1 or in EP 0 591 224 A1. A preferred Ziegler Natta catalyst is of the type BCF20P (proprietary specification of Borealis AG) with dicyclopentanedimethoxysilane (DCPDMS) as external donor (donor D), an Al/Ti ratio (mol/mol) of 200 and an Al/donor ratio (mol/mol) of 20 or less.

The catalyst system for preparing the heterophasic polypropylene composition of the present invention will be described in detail below.

Preferably, the heterophasic polymer composition is prepared by reactor blending in a multistep process comprising at least one loop reactor and at least one gas phase reactor. A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315. A further suitable slurry-gas phase process is the Spheripol® process of Basell.

Preferably, a dispersion of the elastomeric phase within the matrix polymer is produced by performing a further polymerization stage in the presence of particles of matrix polymer, e.g. as a second polymerization stage of a multistage polymerization. Preferably the combination of the matrix and elastomeric copolymer is produced in a multiple stage polymerization using two or more polymerization reactors, more preferably using bulk and gas phase reactors (especially fluidized bed gas phase reactors), and especially preferably using a loop reactor followed by two gas phase reactors or by a loop and a gas phase reactor. In such a procedure, the catalyst system used may be varied between stages but is preferably the same for all stages. Especially preferably, a prepolymerized heterogeneous catalyst is used.

It has now surprisingly been found that a relatively simple and inexpensive process can be used for preparing the heterophasic polypropylene composition of the present invention, by processing the above-described intermediate heterophasic polyolefin composition.

Accordingly, the present invention is further concerned with a process for the production of the heterophasic polyolefin composition according to the present invention.

The process according to the present invention involves the steps of:

(i) providing an unmodified intermediate heterophasic propylene polymer composition which comprises a matrix comprising a propylene homo- and/or copolymer, and an elastomeric ethylene/ alpha-olefin phase dispersed in the matrix; and

(ii) melt mixing the unmodified intermediate heterophasic propylene polymer composition of step (i) with a peroxide masterbatch composition and an oligomeric diene masterbatch composition in a melt mixing device at a barrel temperature in the range of 170 to 300 °C.

In the sense of the present invention "masterbatch" means a concentrated premix of a propylene polymer with a free radical forming agent (e.g. peroxide) or an oligomeric diene, respectively. The peroxide masterbatch is provided in a concentration from 0.5 to 4.0 wt.%, preferably 0.6 to 3.0 wt.%, even more preferably 0.8 to 1.5 wt.%, based on the total weight of the heterophasic propylene polymer composition and the diene masterbatch is provided in a concentration from 0.2 to 10 wt.%, preferably 0.4 to 8 wt.%, even more preferably 0.8 to 7 wt.%, like 0,8 to 5 wt.% based on the total

weight of the heterophasic propylene polymer composition.

The peroxide compound may preferably be contained in the peroxide masterbatch in a range of from 5 to 50 wt., based on the total composition of the masterbatch. The oligomeric diene may preferably be contained in the diene masterbatch in a range of from 20 to 65 wt.%, based on the total composition of the masterbatch.

Preferably, the peroxide is contained in the melt mixture to be subjected to the reactive modifying step in an amount of from 0.025 to 2 wt.%, preferably 0.04 to 0.75 wt.%, based on the total melt mixture before the start of the modifying reaction. The oligomeric diene is preferably contained in the melt mixture to be subjected to the reactive modifying step in an amount of from 0.04 to 6.5 wt.%, preferably 0.16 to 4.55 wt.%, based on the total melt mixture before the start of the modifying reaction.

According to the present invention it was found that using the above masterbatch compositions instead of adding a peroxide component and a diene component in pure form to the polypropylene resin powder in one or more pre-mixing steps prior to the melt-mixing step as conventionally done, much simpler process equipment can be employed. With the inventive masterbatch compositions any well-mixing extruder is useful and there is no need for specific sorption and/or dosing equipment as is required when adding the peroxide and diene component in pure form.

It is essential that the whole process does not involve visbreaking only, i.e. subjecting any intermediate product to peroxide treatment in the absence of a diene compound.

Suitable dienes are conjugated or non-conjugated dienes, linear or branched dienes containing 4 to 20 carbon atoms. Preferred dienes include isoprene, chloroprene, cyclohexadiene, cyclopentadiene, 2,3-dimethylbutadiene, 1,3-pentadiene, 1,4-pentadiene, 1,3-hexadiene, 1,4-heptadiene, 1,4 octadiene and butadiene. The most preferred diene is butadiene, e.g. 1,3-butadiene.

The unmodified intermediate heterophasic propylene polymer composition may be pre-mixed with the diene masterbatch composition and the peroxide masterbatch composition in a powder mixing device, like a horizontal mixer with paddle stirrer. Preferably, the diene masterbatch composition and the peroxide masterbatch composition are directly fed to the melt mixing device, e.g. an extruder and mixed with the unmodified intermediate heterophasic propylene polymer composition within the melt-mixing device.

According to a preferred embodiment of the inventive process the peroxide masterbatch composition and the diene masterbatch composition are respectively prepared by absorbing the active ingredient (peroxide or diene) into highly porous pelletized polypropylene, preferably having a void content in the range of 50 to 90% and a bulk density in the range of 40 to 350 $kg/m^3$ as determined in accordance to ISO 60 resp. DIN 53466.

The propylene polymers into which the peroxide or the oligomeric diene compound is incorporated to form the respective masterbatch composition is preferably a porous propylene polymer, more preferably a porous propylene homopolymer. According to preferred embodiments an oligomeric diene masterbatch composition may comprise 40 to 60 wt.% of a porous homopolymer and 60 to 40 wt.% of polybutadiene, such as ACCUREL® PA104 (supplier: Membrana GmbH, DE). A preferred peroxide masterbatch composition may be TRIGONOX® BPIC 37.5PP-PD (supplier: Membrana GmbH, DE) which consists of 37.5 wt.% peroxide (tert-butylperoxy isopropyl carbonate), 12.5 wt.% isododecane and 50 wt.% porous polypropylene.

The intermediate heterophasic propylene polymer composition together with the diene masterbatch composition and the peroxide masterbatch composition may then be melt-mixed at a barrel temperature of 170 to 300 °C, preferably in a continuous melt mixing device like a single screw extruder, a co-rotating twin screw extruder or a co-kneader.

The barrel temperature preferably is in the range of 170 to 280°C. More preferably a specific temperature profile is maintained along the screw of the melt-mixing device, having an initial temperature T1 in the feed zone, a maximum temperature T2 in the kneading zone and a final temperature T3 in the die zone, all temperatures being defined as barrel temperatures and fulfilling the following relation: $T1 < T3 < T2$. Barrel temperature T1 is preferably in the range of 170 to 200 °C. Barrel temperature T2 (in the kneading zone) preferably is in the range of 220 to 280 °C. Barrel temperature T3 (in the die zone) preferably is in the range of 190 to 220 °C.

The screw speed of the melt mixing device preferably is adjusted to a range from 150 to 800 rotations per minute (rpm).

Following the melt-mixing step, the resulting polymer melt may be pelletized either in an underwater pelletizer or after solidification of one or more strands in a water bath in a strand pelletizer.

The present invention is further concerned with a heterophasic propylene polymer composition obtainable by a multistage polymerisation process in the presence of a stereospecific polymerisation catalyst, comprising the steps of:

(i) producing an unmodified intermediate heterophasic propylene polymer composition as specified above; and

(ii) melt-mixing the unmodified intermediate heterophasic propylene polymer composition of step (i) with a peroxide masterbatch composition and an oligomeric diene masterbatch composition in a melt mixing device at a barrel temperature in the range of 170 to 300 °C.

The melt mixing device preferably includes a feed zone, a kneading zone and a die zone, whereby an initial

barrel temperature T1 is maintained in the feed zone, a barrel temperature T2 is maintained in the kneading zone and a die barrel temperature T3 is maintained in the die zone. Preferably the barrel temperatures T1, T2, and T3 satisfy the following relation: T1 < T3 < T2.

Peroxides which are thermally decomposable upon the conditions of heating and melting the polymer/peroxide mixture and which meet the requirement of having a half life time t (1/2) at 110 °C of greater than 6 min and a half life time t (1/2) at 150 °C of greater than 6 min are suitable. The following organic peroxides are suitable for the above process: dibenzoyl peroxide, tert.-butyl peroxy-2-ethylhexanoate, tert.-amyl peroxy-2- ethylhexanoate, tert.-butyl peroxydiethylacetate, 1,4-di(tert.-butylperoxycarbo)cyclohexane, tert.-butyl peroxyisobutyrate, 1,1-di(tert.-butylperoxy)-3,3,5-trimethyl-cyclohexane, methyl isobutyl ketone peroxide, 2,2-di(4,4-di(tert.-butylperoxy)cyclohexyl)propane, 1,1-di (tert.-butylperoxy) cyclohexane, tert.-butyl peroxy-3,5,5-trimethylhexanoate, tert.-amylperoxy-2-ethylhexyl carbonate, 2,2-di(tert.-butylperoxy)butane, tert.-butylperoxy isopropyl carbonate, tert.-butylperoxy 2-ethylhexyl carbonate, tert.-butyl peroxyacetate, tert.-butyl peroxybenzoate, di-tert.-amyl peroxide and mixtures of these organic peroxides.

As the oligomeric diene those species are suitable which can be polymerized with the aid of free radicals, such as 1,3-butadiene, isoprene, chloroprene, cyclohexadiene, cyclopentadiene, 2,3-dimethylbutadiene, 1,3-pentadiene, 1,4-pentadiene, 1,3-hexadiene, 1,4-heptadiene, 1,4 octadiene and mixtures of these oligomeric dienes.

The dienes may preferably have a molecular weight Mn of not more than 10,000 g/mol, or not more than 5,000 g/mol or not more than 3,000 g/mol. These dienes may be synthesised from one or more low molecular weight dienes such as polybutadienes, especially where the different microstructures in the polymer chain, i. e. 1,4-cis, 1,4-trans and 1,2-vinyl are predominantly in the 1,2-vinyl configuration; or copolymers of butadiene and styrene having 1,2-vinyl in the polymer chain. The 1,2-vinyl content in the diene may preferably be in the range from 30 to 60%, preferably 35 to 55% or 45 to 55%.

Even more preferably the polypropylene composition according to the present invention is obtainable by mixing the intermediate heterophasic propylene polymer composition with 0.5 to 4.0 wt.%, preferably 0.6 to 3.0 wt.%, even more preferably 0.8 to 1.5 wt.%, of a masterbatch of tert-butylperoxy isopropyl carbonate (CAS No. 2372-21-6), such as TRIGONOX® BPIC 37.5PP-PD (supplier: Membrana GmbH, DE) which consists of 37.5 wt.% peroxide (tert-butylperoxy isopropyl carbonate), 12.5 wt.% isododecane and 50 wt.% porous polypropylene, and with 0.2 to 10 wt.%, preferably 0.4 to 8 wt.%, even more preferably 0.8 to 7 wt.%, like 0,8 to 5 wt.% of an oligomeric diene masterbatch composition typically comprising 40 to 60 wt.% of a porous homopolymer and 60 to 40 wt.% of polybutadiene, such as ACCUREL® PA104 (supplier: Membrana GmbH, DE).

It should be understood that the addition of the diene and the peroxide may be achieved at once in the pre-mixing stage or may be split up in two additions during said pre-mixing stage or may particularly preferably be fed directly to the melt mixing device.

It has been surprisingly found that the above-described reactive processing according to the present invention involving the comparatively high concentrations of the diene and the peroxide compound may significantly decrease both the p-xylene soluble fraction (XCS) as well as the hexane extractable fraction of the heterophasic propylene composition of the present invention. It is particularly surprising that both parameter could be decreased as it was shown in the prior art (e.g. EP 2 154 195 A1) that the decrease of XCS levels could only be reached at the expense of an increase of the hexane extractable fraction.

Furthermore, the inventive in-line reactive processing enabled a stable control of the melt flow rate of the final resin and the control of the flexural modulus became independent from the melt flow rate. This is especially advantageous for the design of target MFR ranges for different applications such as flexible liquid containers (e.g. BFS bottles), medical applications films (MAF) and technical applications films (TAF).

It is an essential feature of the present invention that the ratio between flexural modulus and the amount of the p-xylene cold soluble fraction in the final heterophasic propylene polymer composition is adjusted as defined by the inequation of claim 1. By doing so, the composition provides good flexibility (low stiffness) combined with a low level of rubber-like components and yet provides superior impact properties. Likewise, the compositions of the present invention provide at flexural modulus values comparable to the prior art, by far lower amounts of the p-xylene cold soluble fraction which could not be achieved before. This improved property profile makes the composition highly attractive to applications, in which low XCS levels and low stiffness are required such as in medical application films and flexible containers such as blow-fill-seal bottles.

Additionally the impact properties of the final heterophasic polypropylene composition could be maintained at a high level or even be improved, compared to heterophasic polypropylene composition not subjected to the reactive processing according to the invention. Still further the beneficial mechanical properties, such as flexural properties of the conventional resins can be maintained and varied in a desirable fashion. Thus the reactively processing of the unmodified heterophasic polypropylenes achieves a unique and highly desirable property profile of the modified processed heterophasic polypropylene compositions of the present invention.

The heterophasic polyolefin composition according to the present invention has a hexane extractable fraction in an amount of not more than 16 wt.%, preferably not more than 15 wt.%, even more preferably not more than 14 wt.

%, measured according the method described in the examples section.

The heterophasic polyolefin composition according to the present invention has a p-xylene cold soluble fraction (XCS) of less than 45 wt.%, more preferably less than 43 wt.%, even more preferably less than 40 wt.%, yet more preferably less than 35 wt.%, determined at 23 °C according to ISO 6427 and a MFR (2.16 kg, 230 °C) of more than 1.0 to 15 g/10min, preferably in the range of from 1.5 to 10 g/10min, more preferably in the range of from 2 to 10 g/10min, even more preferably in the range of from 2 to 8 g/10min, e.g. in the range of from 2 to 5 g/10min.

The heterophasic polyolefin composition according to the present invention preferably has a Charpy notched impact strength determined according to ISO 179/1eA at 23 °C of at least 50 $kJ/m^2$, preferably at least 60 $kJ/m^2$, even more preferably at least 65 $kJ/m^2$.

The heterophasic polyolefin composition according to the present invention preferably has a flexural modulus of not more than 500 MPa, more preferably not more than 450 MPa, even more preferably not more than 400 MPa, further preferred not more than 300 MPa, and most preferably not more than 250 MPa, measured according to ISO 178 using injection moulded test specimen as described in EN ISO 1873-2 (80 x 10 x 4 mm).

The heterophasic polyolefin composition according to the present invention preferably has a melting temperature Tm in the range of 135 to 170 °C, more preferably from 140 to 167 °C and most preferably from 140 to 165 °C, e.g. 145 to 162 °C. High melting temperatures enable the provision of materials capable of withstanding steam sterilization.

The heterophasic polyolefin composition according to the present invention preferably has a relationship between flexural modulus (FM) and the p-xylene cold soluble fraction (XCS) of the composition fulfilling the following inequation I, more preferably the inequation Ia, even more preferably the inequation Ib, especially preferably the inequation Ic, most preferably the inequation Id:

I :

$$FM\ [MPa] + 13.3\ [MPa/wt.\%] * XCS\ [wt.\%] < 800\ [MPa]$$

Ia:

$$FM\ [MPa] + 13.3\ [MPa/wt.\%] * XCS\ [wt.\%] < 780\ [MPa]$$

Ib:

$$FM\ [MPa] + 13.3\ [MPa/wt.\%] * XCS\ [wt.\%] < 750\ [MPa]$$

Ic:

$$FM\ [MPa] + 13.3\ [MPa/wt.\%] * XCS\ [wt.\%] < 720\ [MPa]$$

Id:

$$FM\ [MPa] + 13.3\ [MPa/wt.\%] * XCS\ [wt.\%] < 700\ [MPa]$$

Preferably the heterophasic polyolefin composition according to the present invention is obtained by a multistage polymerization process, as described above, in the presence of a catalyst system comprising as component (i) a Ziegler-Natta procatalyst which contains a transesterification product of a lower alcohol and a phthalic ester.

The procatalyst used according to the invention is preferably prepared by

a) reacting a spray crystallized or emulsion solidified adduct of $MgCl_2$ and a $C_1$-$C_2$ alcohol with $TiCl_4$
b) reacting the product of stage a) with a dialkylphthalate of formula (I)

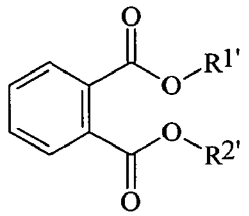

(I)

wherein R1' and R2' are independently at least a $C_5$ alkyl under conditions where a transesterification between said $C_1$ to $C_2$ alcohol and said dialkylphthalate of formula (I) takes place to form the internal donor
c) washing the product of stage b) or
d) optionally reacting the product of step c) with additional $TiCl_4$.

The procatalyst is produced as defined for example in the patent applications WO 87/07620, WO 92/19653, WO 92/19658 and EP 0 491 566. The content of these documents is herein included by reference.

First an adduct of $MgCl_2$ and a $C_1$-$C_2$ alcohol of the formula $MgCl_2$*nROH, wherein R is methyl or ethyl and n is 1 to 6, is formed. Ethanol is preferably used as alcohol. The adduct, which is first melted and then spray crystallized or emulsion solidified, is used as catalyst carrier.

In the next step the spray crystallized or emulsion solidified adduct of the formula $MgCl_2$*nROH, wherein R is methyl or ethyl, preferably ethyl and n is 1 to 6, is contacted with $TiCl_4$ to form a titanized carrier, followed by the steps of

- adding to said titanised carrier

  (i) a dialkylphthalate of formula (I) with R1' and R2' being independently at least a $C_5$-alkyl, like at least a $C_8$-alkyl, or preferably

  (ii) a dialkylphthalate of formula (I) with R1' and R2' being the same and being at least a $C_5$-alkyl, like at least a $C_8$-alkyl,
  or more preferably

  (iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-iso-octylphthalate or diethylhexylphthalate, in particular diethylhexylphthalate,
  to form a first product,

- subjecting said first product to suitable transesterification conditions, i.e. to a temperature above 100 °C, preferably between 100 to 150 °C, more preferably between 130 to 150 °C, such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II)

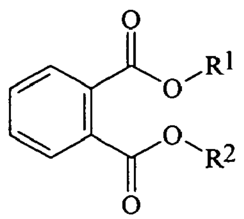

(II)

  with $R^1$ and $R^2$ being methyl or ethyl, preferably ethyl,
  the dialkylphthalate of formula (II) being the internal donor and

- recovering said transesterification product as the procatalyst composition (component (i)).

The adduct of the formula $MgCl_2$*nROH, wherein R is methyl or ethyl and n is 1 to 6, is in a preferred embodiment melted and then the melt is preferably injected by a gas into a cooled solvent or a cooled gas, whereby the adduct is

crystallized into a morphologically advantageous form, as for example described in WO 87/07620.

This crystallized adduct is preferably used as the catalyst carrier and reacted to the procatalyst useful in the present invention as described in WO 92/19658 and WO 92/19653.

As the catalyst residue is removed by extracting, an adduct of the titanised carrier and the internal donor is obtained, in which the group deriving from the ester alcohol has changed. In case sufficient titanium remains on the carrier, it will act as an active element of the procatalyst. Otherwise the titanization is repeated after the above treatment in order to ensure a sufficient titanium concentration and thus activity.

Preferably the procatalyst used according to the invention contains not more than 2.5 wt.-% of titanium, preferably not more than 2.2% wt.-% and more preferably not more than 2.0 wt.-%. Its donor content is preferably between 4 to 12 wt.-% and more preferably between 6 and 10 wt.-%.

More preferably the procatalyst used according to the invention has been produced by using ethanol as the alcohol and dioctylphthalate (DOP) as dialkylphthalate of formula (I), yielding diethyl phthalate (DEP) as the internal donor compound.

Still more preferably the catalyst used according to the invention is the BCF20P catalyst of Borealis (prepared according to WO 92/19653 as disclosed in WO 99/24479; especially with the use of dioctylphthalate as dialkylphthalate of formula (I) according to WO 92/19658) or the catalyst Polytrack 8502, commercially available from W.R. Grace, Columbia MA, USA.

For the production of the heterophasic polyolefin composition according to the invention the catalyst system used preferably comprises in addition to the special Ziegler-Natta procatalyst an organometallic cocatalyst as component (ii).

Accordingly it is preferred to select the cocatalyst from the group consisting of trialkylaluminum, like triethylaluminum (TEA), dialkyl aluminum chloride and alkyl aluminumsesquichloride.

Component (iii) of the catalysts system used is an external donor represented by formula (IIIa) or (IIIb). Formula (IIIa) is defined by

$$Si(OCH_3)_2(R^5)_2 \qquad (IIIa)$$

wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

It is in particular preferred that $R^5$ is selected from the group consisting of iso-propyl, iso-butyl, iso-pentyl, tert.-butyl, tert.-amyl, neopentyl, cyclopentyl, cyclohexyl, methylcyclopentyl and cycloheptyl.

Formula (IIIb) is defined by

$$Si(OCH_2CH_3)_3(NR_xR_y) \qquad (IIIb)$$

wherein $R_x$ and Ry can be the same or different a represent a hydrocarbon group having 1 to 12 carbon atoms.

$R_x$ and Ry are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R_x$ and Ry are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R_x$ and Ry are the same, yet more preferably both $R_x$ and Ry are an ethyl group.

More preferably the external donor of formula (IIIb) is diethylaminotriethoxysilane .

Most preferably the external donor is of formula (IIIa), like dicyclopentyl dimethoxy silane [$Si(OCH_3)_2$(cyclopentyl)$_2$] or diisopropyl dimethoxy silane [$Si(OCH_3)_2(CH(CH_3)_2)_2$].

In a further embodiment, the Ziegler-Natta procatalyst can be modified by polymerising a vinyl compound in the presence of the catalyst system, comprising the special Ziegler-Natta procatalyst (component (i)), an external donor (component (iii) and optionally a cocatalyst (component (ii)), which vinyl compound has the formula:

$$CH_2{=}CH{-}CHR_3R_4$$

wherein $R_3$ and $R_4$ together form a 5- or 6-membered saturated, unsaturated or aromatic ring or independently represent an alkyl group comprising 1 to 4 carbon atoms, and the modified catalyst is used for the preparation of the heterophasic propylene copolymer according to this invention. The polymerized vinyl compound can act as an $\alpha$-nucleating agent.

Concerning the modification of catalyst reference is made to the international applications WO 99/24478, WO 99/24479 and particularly WO 00/68315, incorporated herein by reference with respect to the reaction conditions concerning the modification of the catalyst as well as with respect to the polymerization reaction.

The present invention is further concerned with a moulded article comprising the processed heterophasic

propylene polymer composition as described herein. The main end-uses for such moulded articles are in packaging applications, like flexible plastic containers and household articles but also medical products, such as medical application films but also technical application films. The articles comprising the heterophasic propylene polymer composition according to the present invention may also be used for the production of medical pouches, containers for frozen and non frozen food and the like. The articles may also include films for packaging or coating.

The articles comprising the heterophasic propylene polymer composition according to the invention may be produced by any common conversion process suitable for thermoplastic polymers like extrusion, injection moulding, blow moulding, injection stretch blow moulding, cast film extrusion, blown film extrusion or thermoforming.

The present invention is also concerned with the use of the heterophasic propylene polymer composition according to the present invention for extrusion, injection moulding, blow moulding, injection stretch blow moulding, cast film extrusion, blown film extrusion or thermoforming or the like.

## Examples

### 1. Methods

#### a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg. It is also designated in this application as "$MFR_2$"

#### b) Hexane extractable content

Hexane extractables were determined according to the following procedure. 1 g of the sample was put into a 300 ml Erlenmeyer flask and 100 ml of hexane was added. The mixture was boiled under stirring in a reflux condenser for 4 hours. The hot solution was filtered through a folded filter paper and dried (in a vacuum oven at 90 °C) and weighted (0.0001 g exactly) in a round shenk. The Erlenmeyer flask and the filter were washed with n-hexane. Then the hexane was evaporated under a nitrogen stream on a rotary evaporator. The round shenk was dried in a vacuum oven at 90°C over night and was put into a desiccator for at least 2 hours to cool down. The shenk was weighted again and the hexane soluble was calculated therefrom.

#### c) Intrinsic viscosity

Intrinsic viscosity was measured according to DIN ISO 1628/1, October 1999 (in tetralin at 135 °C).

#### d) p-Xylene soluble content

The p-xylene cold soluble content (XCS) of the tested polymer compositions was determined according to ISO 6427 at 23 °C.

The amorphous content (AM) is measured by separating the above obtained p-xylene cold soluble fraction (XCS) and precipitating the amorphous part with acetone. The precipitate was filtered and dried in a vacuum oven at 90 °C.

$$AM\% = \frac{100\ x\ m1\ x\ v0}{m0\ x\ v1}$$

wherein

AM% is the amorphous fraction;
m0 is the initial polymer amount (g);
m1 is the weight of the precipitate (g);
v0 is the initial volume (ml);
v1 is the volume of the analyzed sample (ml).

**e) Comonomer content**

The comonomer content was determined by quantitative Fourier transform infrared spectroscopy (FTIR) after basic assignment calibrated via quantitative $^{13}C$ nuclear magnetic resonance (NMR) spectroscopy in a manner well known in the art. Thin films were pressed to a thickness of between 100-500 μm and spectra were recorded in transmission mode.

Specifically, the ethylene content of a polypropylene-co-ethylene copolymer was determined using the baseline corrected peak area of the quantitative bands found at 720-722 and 730-733 $cm^{-1}$. Specifically, the butene or hexene content of a polyethylene copolymer was determined using the baseline corrected peak area of the quantitative bands found at 1377-1379 $cm^{-1}$. Quantitative results were obtained based upon reference to the film thickness.

**f) Number average molecular weight ($M_n$), weight average molecular weight ($M_w$) and molecular weight distribution (MWD)**

The weight average molecular weight Mw and the molecular weight distribution (MWD = Mw/Mn wherein Mn is the number average molecular weight and Mw is the weight average molecular weight) was determined by Gel Permeation Chromatography (GPC) and measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 ml/min. 216.5 μl of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5 - 10 mg of polymer in 10 ml (at 160 °C) of stabilized TCB (same as mobile phase) and keeping for 3 hours with continuous shaking prior sampling in into the GPC instrument.

**g) Melting temperature $T_m$, crystallization temperature $T_c$,**

Both properties were measured with a Mettler TA820 differential scanning calorimeter (DSC) on 5-10 mg samples. Both crystallization and melting curves were obtained during 10 °C/min cooling and heating scans between 30 °C and 225 °C. Melting and crystallization temperatures were taken as the peaks of endotherms and exotherms. Also the melt- and crystallization enthalpy (Hm and Hc) were measured by the DSC method according to ISO 11357-3.

**h) Charpy notched impact Strength (NIS)**

Charpy notched impact strength was determined according to ISO 179 / 1eA:2000 at 23 °C by using injection moulded test specimens as described in EN ISO 1873-2 (80 x 10 x 4 mm).

**i) Flexural properties**

Flexural properties such as flexural modulus, flexural strength, flexural strain and flexural stress were determined according to ISO 178 using injection molden test specimen as described in EN ISO 1873-2 (80 x 10 x 4 mm).

**j) Bulk density**

The bulk density of the highly porous polypropylene carrier was determined according to ISO 60:1997.

**2. Compositions:**

The base resins (heterophasic polymer compositions) were prepared in a Borstar™ pilot plant using one liquid-phase loop reactor and three gas phase reactors. The catalyst used in the polymerization was prepared according to WO 92/19653 with DOP as dialkylphthalate of the formula (I) given above and ethanol as alcohol, in combination with co-catalyst triethylaluminum (TEA) and dicyclopentyldimethoxysilane (donor D) as an external donor at a ratio TEA/propylene of 0.2 g/kg and TEA/donor of 15 (wt/wt).

As the matrix phase a monomodal propylene random copolymer with a MFR (230 °C, 2.16 kg) of 1.5 to 2.3 g/10min (loop MFR) was used. The dispersed phase (EPR) is of monomodal design in terms of comonomer content and molecular weight. Thus three intermediate heterophasic propylene copolymers (Heco 1, Heco 2 and Heco 3) were prepared. Details of production and analysis can be found in Table 1.

## Table 1

| | Product name | unit | Heco 1 | Heco 2 | Heco 3 |
|---|---|---|---|---|---|
| LOOP Reactor | catalyst type | | BCF20P | BCF20P | BCF20P |
| | Donor | | D | D | D |
| | MFR 2.16 | [g/10 min] | 2.0 | 1.5 | 2.3 |
| | C2 content | [wt%] | 1.8 | 2.4 | 2.4 |
| | XCS | [wt%] | 4.5 | 6.8 | 6.8 |
| | | | | | |
| GPR 1 | MFR 2.16 | [g/10 min] | 2.0 | 1.5 | 1.7 |
| | C2 content | [wt%] | 2.0 | 2.4 | 3.2 |
| | XCS | [wt%] | 5.1 | 4.9 | 7.5 |
| | | | | | |
| GPR 2 | MFR 2.16 | [g/10 min] | 0.6 | 1.6 | 1.2 |
| | C2 content | [wt%] | 15.0 | 8.9 | 10.0 |
| | XCS | [wt%] | 42.4 | 33.9 | 35.6 |
| | C2 of AM | [wt%] | 29 | 19 | 22 |
| | i.V. of AM | [dl/g] | 2.9 | 2.3 | 2.7 |
| | Tm | [°C] | | 149.4 | 149.8 |
| | | | | | |
| GPR 3 | MFR 2.16 | [g/10'] | 0.5 | 1.5 | 1.1 |
| | C2 content | [wt%] | 17.4 | 9.4 | 9.7 |
| | XCS | [wt%] | 50.3 | 38.4 | 36.9 |
| | C2 of AM | [wt%] | 30 | 20 | 22 |
| | i.V. of AM | [dl/g] | 3.3 | 2.4 | 3.0 |
| | Tm | [°C] | 154.0 | 150.6 | 150.0 |

The obtained heterophasic polypropylene compositions were subjected to a post-reactor reactive processing by using a diene masterbatch composition and a peroxide masterbatch composition (inventive examples) as detailed below. In the comparative examples one or both of the masterbatch compositions were omitted. Comparative examples CE2 - CE3 were prepared by subjecting the base resin to a peroxide treatment in the absence of a diene compound (visbreaking) at different peroxide concentrations.

The oligomeric diene masterbatch composition used was as ACCUREL® PA104 (supplier: Membrana GmbH, DE) based on the highly porous polypropylene homopolymer carrier ACCUREL® XP100-84 (supplier: Membrana GmbH, DE) having a void content of 83 % and a bulk density of 95 kg/m$^3$. The peroxide masterbatch composition used was TRIGONOX® BPIC 37.5PP-PD (supplier: Membrana GmbH, DE) based on the highly porous polypropylene homopolymer carrier ACCUREL® MP100 (supplier: Membrana GmbH, DE) having a void content of 78 % and a bulk density of 130 kg/m$^3$.

Both the butadiene masterbatch and the peroxide masterbatch were injected into the polymer melt in the extruder in a twin screw extruder ZSK18 (Coperion GmbH, Germany) having a barrel diameter of 18 mm and an L/D-ratio of 40 equipped with a high intensity mixing screw having three kneading zones and a two-step degassing setup. A temperature setting: 170/180/190/220/220/210/210 °C was used with a melt temperature of 215 °C. The screw speed was set at 300 rpm. Following the melt-mixing step, the resulting polymer melt was pelletized in an underwater pelletizer or after solidification of one or more strands in a waterbath in a strand pelletizer at a water temperature of 40°C. The throughput was 5 kg/h.

Physical and mechanical properties of the inventive examples (E1 - E9) and the comparative examples (CE1-CE7) are summarized in Table 2.

Table 2

| | | E1 | E2 | E3 | E4 | E5 | CE1 | CE2 | CE3 | CE4 | CE5 | CE6 | CE7 | E6 | E7 | E8 | E9 |
|---|---|---|---|---|---|---|---|---|---|---|---|---|---|---|---|---|---|
| **Base resin (Heco)** | | Heco 1 | Heco 1 | Heco 1 | Heco 1 | Heco 1 | Heco 1 | Heco 1 | Heco 1 | Heco 1 | Heco 1 | Heco 2 | Heco 3 | Heco 2 | Heco 2 | Heco 3 | Heco 3 |
| **POX-MB used** | **wt.%** | 0.8 | 0.8 | 0.8 | 1.2 | 1.2 | 0 | 0.05 | 0.45 | 0.1 | 0.2 | 0 | 0 | 1.2 | 1.2 | 1.2 | 1.2 |
| **PBD-MB used** | **wt.%** | 0.2 | 0.4 | 0.8 | 1.2 | 2.4 | 0 | 0 | 0 | 0.05 | 0.1 | 0 | 0 | 4.5 | 6.1 | 4.5 | 6.5 |
| **MFR** | **g/ 10min** | 5.6 | 3.4 | 1.9 | 3.7 | 2.4 | 0.7 | 1.2 | 3.5 | 1.6 | 1.5 | 1.2 | 1.6 | 3.6 | 2.2 | 3.9 | 2.2 |
| **Flexural modulus** | **MPa** | 202 | 202 | 201 | 196 | 198 | 245 | 229 | 212 | 247 | 231 | 442 | 374 | 392 | 386 | 343 | 339 |
| **ΔFlex modulus** | **%** | -18 | -17 | -18 | -20 | -19 | 0 | -7 | -13 | 1 | -5 | 0 | 0 | -11 | -13 | -8 | -9 |
| **FM + 13.3*XCS** | **MPa** | 778 | 759 | 750 | 648 | 630 | 901 | 887 | 846 | 905 | 875 | 914 | 891 | 670 | 647 | 699 | 630 |
| **NIS 23°C** | **kJ/m$^2$** | 70 | 71 | 70 | 69 | 69 | 73 | 71 | 72 | 72 | 71 | | 82 | 78 | 79 | 78 | 79 |
| **XCS** | **wt.%** | 43.3 | 41.9 | 41.3 | 34.0 | 32.5 | 49.3 | 49.5 | 47.7 | 49.5 | 48.4 | 35.5 | 38.9 | 20.9 | 19.6 | 26.8 | 21.9 |
| **ΔXCS** | **%** | -12 | -15 | -16 | -31 | -34 | 0 | 0 | -3 | 0 | -2 | 0 | 0 | -41 | -45 | -31 | -44 |
| **IV of XCS** | **ml/g** | 121 | 185 | 187 | 166 | 163 | 336 | 296 | 218 | 332 | 277 | 300 | 217 | 108 | 106 | 117 | 94 |
| **IV of XCU** | **ml/g** | 154 | 154 | 84 | 131 | 129 | 270 | 225 | 173 | 222 | 214 | 240 | 262 | 157 | 143 | 185 | 153 |
| **C6-Solubles** | **wt.%** | 15.9 | 14.6 | 13.7 | 10.5 | 9.6 | 14.8 | 17.0 | 18.5 | 18.2 | 16.7 | 7.9 | 9.9 | 5.1 | 5.1 | 6.8 | 6.5 |
| **ΔC6 (from ref)** | **%** | 8 | -1 | -7 | -29 | -35 | 0 | 15 | 25 | 23 | 13 | 0 | 0 | -35 | -35 | -31 | -34 |

CE2 and CE3 were subjected to a reactive modification step using a peroxide masterbatch for a simple visbreaking step. Thus different target MFR ranges could be reached. However, both the flexural modulus and the XCS content of the visbroken materials were reduced as expected. This is thought to be due to the relatively high concentrations of the added peroxide concentrations that are required to reach these MFRs. At such high peroxide concentrations it is possible that branching and crosslinking reactions might already be initiated without polybutadiene, hence leading to the observed effects. Importantly, however, the hexane solubles content was not reduced but instead significantly increased by the visbreaking step.

When reactive modification was applied to the polypropylene base resin with low concentrations of up to 0.3 wt-% of peroxide masterbatch and up to 0.6 wt-% of polybutadiene (PBD) masterbatch (CE4 and CE5 according to Table 2), it was found that only the lowest target MFR range was accessible and no control of MFR was possible.

For a final MFR of 1.9, the reactive modification step of the invention using a comparatively high concentration of peroxide masterbatch (0.8 wt.%), enabled a moderate decrease of the flexural modulus as well as a considerable decrease both of the XCS and the hexane solubles content (inventive Example E3) compared to simple visbreaking to a similar MFR (CE2).

If using higher concentrations of 0.8 wt-% and more of the peroxide masterbatch, it was possible to control the end MFR of the reactively modified polypropylene compositions and to reach all desired target MFR ranges (inventive Examples E1 to E5). Surprisingly, in contrast to the results with the low peroxide masterbatch concentrations, it was seen that with these high peroxide masterbatch concentrations the flexural modulus became independent of MFR. With 0.8 wt-% peroxide masterbatch the flexural modulus was decreased to just above 200 MPa (E1 - E3) and with 1.2 wt-% peroxide masterbatch to just below 200 MPa (E4 and E5). This means that in the same reactive processing production line, just by varying the diene masterbatch concentration, materials with suitable MFRs for each of the desired target applications (blow-fill-seal bottles, medical application films, technical application films) but the same softness can be produced.

The observed effect of the high masterbatch concentrations in the reactive processing step on the XCS and C6-solubles content was particularly evident. With 0.8 wt.-% peroxide masterbatch concentration, a noticeable decrease in XCS could be obtained (E1 - E3). With the highest tested peroxide masterbatch concentration of 1.2 wt.-% (E4 / E5) a significant reduction of both XCS and C6-solubles content by over 30% compared to the reference (CE1) was observed. The decrease of C6-solubles reached even over 40% when compared to simple visbreaking to the same MFR.

The observed effect of the high masterbatch concentrations in the reactive processing step on the XCS and C6-solubles content was also proven with inventive examples E6 and E7 versus comparative example CE6 and inventive examples E8 and E9 versus comparative example CE7. With 1.2 wt.-% peroxide masterbatch concentration and high diene masterbatch concentrations (4.5 to 6.5 wt.-%) a significant decrease in XCS and C6-solubles could be obtained.

The results presented in Table 2 and in Fig. 1 further show the impact of the specific relationship between the flexural modulus (FM) and the p-xylene cold soluble fraction (XCS) in the obtained polypropylene resins. A composition prepared without the reactive modification step of the invention (e.g. CE1, CE6 and CE7) has an excessively high value of this relationship (FM + 13.3 * XCS) and is not desired or suitable for the applications of the invention. This is true even if these comparative compositions have a flexural modulus which classifies them as soft polypropylenes which are principally desired. On the other hand, compositions according to the invention, especially if prepared with comparatively high concentrations of the peroxide and the oligomeric diene compound in the reactive modification step show a decreased value of FM/XCS relationship (e.g. E5 - E9). These compositions are characterized not only by softness/flexibility, but also low XCS and C6 solubles content while still the impact properties are excellent. These compositions are highly suitable for the intended applications such as flexible containers, medical application films and technical application films.

Even though some of the comparative compositions (e.g. CE2 - CE5) show higher softness than the especially preferred compositions of E6 - E9), they are unsuitable for the above applications due to their high value of the FM/XCS relationship outside the range of the invention.

It can be seen from the above results that with the inventive reactive processing step using comparatively high concentrations of peroxide and diene masterbatch, the p-xylene cold soluble fraction and the hexane extractable fraction in the modified polypropylene compositions could be reduced significantly, while soft compositions could be manufactured with a stable control of different MFR target ranges. Thus, the inventive compositions achieved a high level of mechanical and physical properties, while still meeting the food and drug regulations as well as medical pharmacopoeia regulations.

Therefore the specific property combination of the inventive heterophasic propylene polymer compositions is not achievable by conventional heterophasic propylene polymer compositions not subjected to the advanced post-reactor treatment of the present invention.

**Claims**

1. A heterophasic propylene polymer composition, comprising

- a matrix comprising a propylene homo- and/or copolymer,
- an elastomeric ethylene/alpha-olefin phase dispersed in the matrix,

the heterophasic propylene polymer composition comprising monomer units derived from an oligomeric diene compound,
having a p-xylene cold soluble fraction (XCS) of less than 45 wt.%, determined at 23 °C according to ISO 6427,
an MFR (2.16 kg, 230 °C, ISO 1133) of more than 1.0 to 15 g/10min.,
a flexural modulus, determined according to according to ISO 178 of not more than 500 MPa, and
a relationship between flexural modulus (FM) and the p-xylene cold soluble fraction (XCS) of the composition fulfilling the following equation:

$$FM\ [MPa] + 13.3\ [MPa/wt.\%] * XCS\ [wt.\%] < 800\ [MPa].$$

**2.** Heterophasic propylene polymer composition obtainable by a multistage polymerisation process in the presence of a stereospecific polymerisation catalyst, comprising the steps of:

(i) producing an unmodified intermediate heterophasic propylene polymer composition comprising a matrix comprising a propylene homo- and/or copolymer, and an elastomeric ethylene/alpha-olefin phase dispersed in the matrix; and
(ii) melt mixing the unmodified intermediate heterophasic propylene polymer composition of step (i) with a peroxide masterbatch composition and an oligomeric diene masterbatch composition, thus providing a melt mixture in a melt mixing device at a barrel temperature in the range of 170 to 300 °C.

**3.** Heterophasic propylene polymer composition according to claim 2, wherein the melt mixing device includes a feed zone, a kneading zone and a die zone, whereby an initial barrel temperature T1 is maintained in the feed zone, a barrel temperature T2 is maintained in the kneading zone and a die barrel temperature T3 is maintained in the die zone, whereby the barrel temperatures T1, T2, and T3 satisfy the following relation:

$$T1 < T3 < T2.$$

**4.** Heterophasic propylene polymer composition according to any one of claims 1 to 3, having a hexane extractable fraction in an amount of not more than 16 wt.%, measured according to the method as described herein.

**5.** Heterophasic propylene polymer composition according to any one of the preceding claims, having a Charpy notched impact strength at +23°C of at least 50 kJ/$m^2$, measured according to ISO 179/1 eA.

**6.** Heterophasic propylene polymer composition according to any one of the preceding claims, having a flexural modulus of not more than 450 MPa, measured according to ISO 178.

**7.** Process for the production of a heterophasic propylene polymer composition according to any of claims 1 to 6, comprising the steps of:

(i) providing an unmodified intermediate heterophasic propylene polymer composition which comprises a matrix comprising a propylene homo- and/or copolymer, and an elastomeric ethylene/alpha-olefin phase dispersed in the matrix; and
(ii) melt mixing the unmodified intermediate heterophasic propylene polymer composition of step (i) with a peroxide masterbatch composition and an oligomeric diene masterbatch composition , thus providing a melt mixture in a melt mixing device at a barrel temperature in the range of 170 to 300 °C.

**8.** Process according to claim 7, wherein the unmodified intermediate heterophasic propylene polymer composition has a MFR (230 °C, 2.16 kg) of less than 10 g/10min.

**9.** Process according to claim 7 or 8, wherein the peroxide masterbatch composition is added in step (ii) in an amount of 0.5 to 4.0 wt.%, based on the total heterophasic propylene polymer composition.

**10.** Process according to claim 9, wherein the peroxide is contained in the melt mixture of step (ii) before the start of

the modifying reaction in an amount of from 0.025 to 2 wt.%.

**11.** Process according to any one of claims 7 to 10, wherein the oligomeric diene masterbatch composition is added in step (ii) in an amount of 0.2 to 10 wt.%, based on the total heterophasic propylene polymer composition.

**12.** Process according to claim 11, wherein the oligomeric diene is contained in the melt mixture of step (ii) before the start of the modifying reaction in an amount of from 0.04 to 6.5 wt.%.

**13.** Article comprising the heterophasic propylene polymer composition according to any of claims 1 to 6.

**14.** Article according to claim 13 which is an extruded, injection moulded, blow moulded, injection stretch blow moulded, cast film, blown film, extruded or thermoformed article.

**15.** Use of a heterophasic propylene polymer composition as defined in any one of claims 1 to 6 for extrusion, injection moulding, blow moulding, injection stretch blow moulding, cast film extrusion, blown film extrusion or thermoforming.

**Amended claims in accordance with Rule 137(2) EPC.**

**1.** A heterophasic propylene polymer composition, comprising

- a matrix comprising a propylene homo- and/or copolymer,
- an elastomeric ethylene/alpha-olefin phase dispersed in the matrix, the heterophasic propylene polymer composition comprising monomer units derived from an oligomeric diene compound,

having a p-xylene cold soluble fraction (XCS) of less than 45 wt.%, determined at 23 °C according to ISO 6427, an MFR (2.16 kg, 230 °C, ISO 1133) of more than 1.0 to 15 g/10min., a flexural modulus, determined according to according to ISO 178 of not more than 500 MPa, and
a relationship between flexural modulus (FM) and the p-xylene cold soluble fraction (XCS) of the composition fulfilling the following equation:

$$FM\ [MPa] + 13.3\ [MPa/wt.\%] \cdot XCS\ [wt.\%] < 800\ [MPa].$$

**2.** Heterophasic propylene polymer composition according to claim 1, wherein the melt mixing device includes a feed zone, a kneading zone and a die zone, whereby an initial barrel temperature T1 is maintained in the feed zone, a barrel temperature T2 is maintained in the kneading zone and a die barrel temperature T3 is maintained in the die zone, whereby the barrel temperatures T1, T2, and T3 satisfy the following relation:

$$T1 < T3 < T2.$$

**3.** Heterophasic propylene polymer composition according to claim 1 or 2, having a hexane extractable fraction in an amount of not more than 16 wt.%, measured according to the method as described herein.

**4.** Heterophasic propylene polymer composition according to any one of the preceding claims, having a Charpy notched impact strength at +23°C of at least 50 kJ/m$^2$, measured according to ISO 179/1eA.

**5.** Heterophasic propylene polymer composition according to any one of the preceding claims, having a flexural modulus of not more than 450 MPa, measured according to ISO 178.

**6.** Process for the production of a heterophasic propylene polymer composition according to any of claims 1 to 5, comprising the steps of:

(i) providing an unmodified intermediate heterophasic propylene polymer composition which comprises a matrix comprising a propylene homo- and/or copolymer, and an elastomeric ethylene/alpha-olefin phase dispersed in

the matrix; and
(ii) melt mixing the unmodified intermediate heterophasic propylene polymer composition of step (i) with a peroxide masterbatch composition and an oligomeric diene masterbatch composition , thus providing a melt mixture in a melt mixing device at a barrel temperature in the range of 170 to 300 °C.

**7.** Process according to claim 6, wherein the unmodified intermediate heterophasic propylene polymer composition has a MFR (230 °C, 2.16 kg) of less than 10 g/10min.

**8.** Process according to claim 6 or 7, wherein the peroxide masterbatch composition is added in step (ii) in an amount of 0.5 to 4.0 wt.%, based on the total heterophasic propylene polymer composition.

**9.** Process according to claim 8, wherein the peroxide is contained in the melt mixture of step (ii) before the start of the modifying reaction in an amount of from 0.025 to 2 wt.%.

**10.** Process according to any one of claims 6 to 9, wherein the oligomeric diene masterbatch composition is added in step (ii) in an amount of 0.2 to 10 wt.%, based on the total heterophasic propylene polymer composition.

**11.** Process according to claim 10, wherein the oligomeric diene is contained in the melt mixture of step (ii) before the start of the modifying reaction in an amount of from 0.04 to 6.5 wt.%.

**12.** Article comprising the heterophasic propylene polymer composition according to any of claims 1 to 5.

**13.** Article according to claim 12 which is an extruded, injection moulded, blow moulded, injection stretch blow moulded, cast film, blown film, extruded or thermoformed article.

**14.** Use of a heterophasic propylene polymer composition as defined in any one of claims 1 to 5 for extrusion, injection moulding, blow moulding, injection stretch blow moulding, cast film extrusion, blown film extrusion or thermoforming.

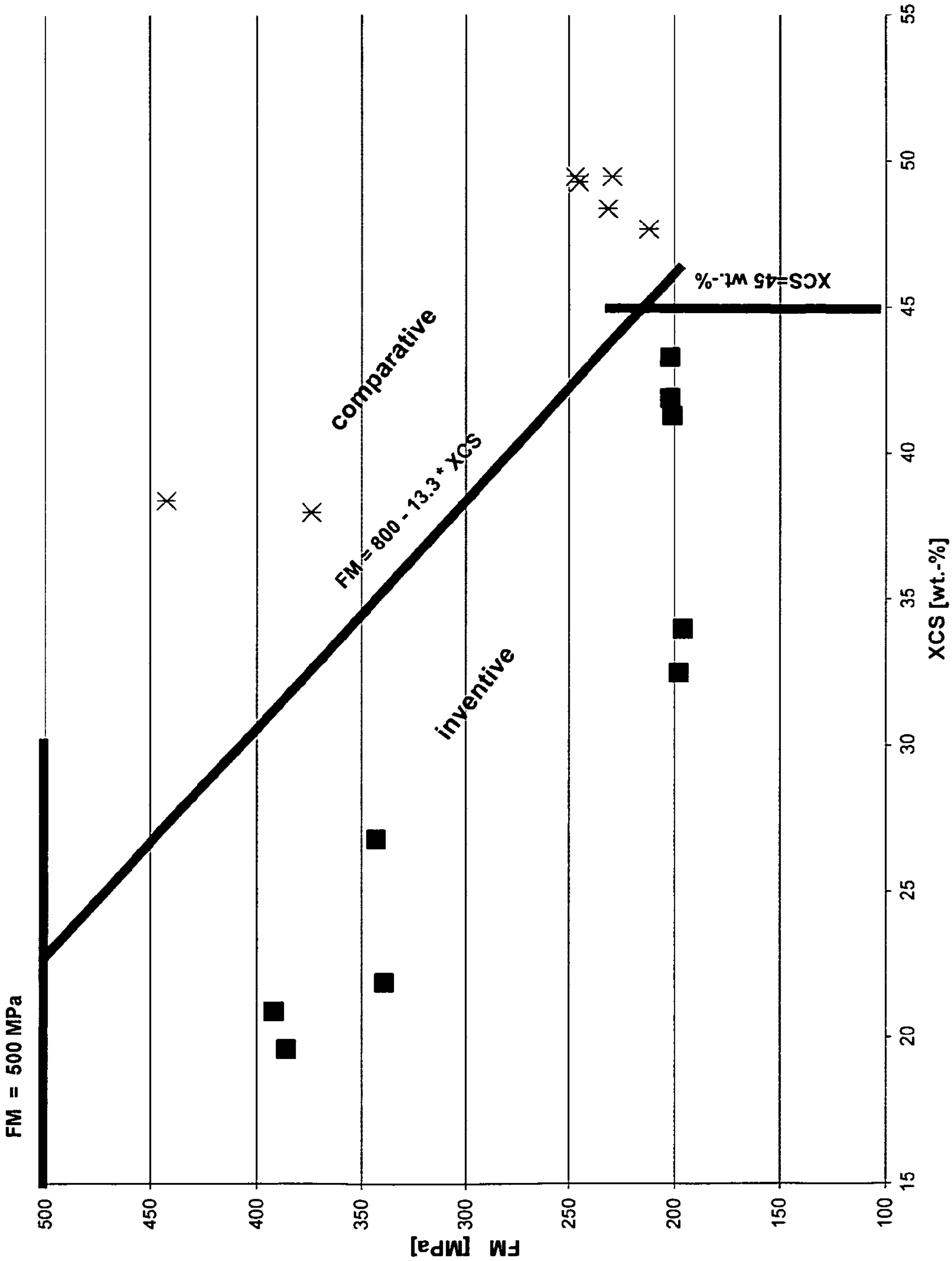
FM = 500 MPa
comparative
inventive
FM = 800 - 13.3 * XCS
XCS=45 wt.-%
FM [MPa]
500
450
400
350
300
250
200
150
100
XCS [wt.-%]
15
20
25
30
35
40
45
50
55

Fig. 1

Europäisches Patentamt
European Patent Office
Office européen des brevets

# EUROPEAN SEARCH REPORT

Application Number
EP 12 00 0187

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 2 397 517 A1 (BOREALIS AG [AT])<br>21 December 2011 (2011-12-21)<br>* the whole document *<br>----- | 1,2<br>3-15 | INV.<br>C08L23/10 |
| X | EP 2 058 340 A1 (BOREALIS TECH OY [FI])<br>13 May 2009 (2009-05-13)<br>* abstract; claims 1-26 *<br>* page 11, paragraph 93 *<br>----- | 2 | |
| X | EP 2 154 195 A1 (BOREALIS AG [AT])<br>17 February 2010 (2010-02-17)<br>* abstract; claims 1-20 *<br>----- | 1,2 | |
| A | EP 2 368 938 A1 (BOREALIS AG [AT])<br>28 September 2011 (2011-09-28)<br>* abstract; claims 1-17 *<br>----- | 1-15 | |
| X | WO 2008/148695 A1 (BOREALIS TECH OY [FI]; PHAM TUNG [AT]; GAHLEITNER MARKUS [AT])<br>11 December 2008 (2008-12-11)<br>* abstract; claims 1-33 *<br>----- | 2 | TECHNICAL FIELDS SEARCHED (IPC) |
| E | EP 2 423 257 A1 (BOREALIS AG [AT])<br>29 February 2012 (2012-02-29)<br>* the whole document *<br>----- | 2 | C08L |

The present search report has been drawn up for all claims

1

| Place of search | Date of completion of the search | Examiner |
|---|---|---|
| The Hague | 8 March 2012 | Bergmans, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 12 00 0187

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2012

| Patent document cited in search report | Publication date | Patent family member(s) | Publication date |
|---|---|---|---|
| EP 2397517 A1 | 21-12-2011 | EP 2397517 A1 | 21-12-2011 |
| | | WO 2011157734 A1 | 22-12-2011 |
| EP 2058340 A1 | 13-05-2009 | AT 542840 T | 15-02-2012 |
| | | CN 101855255 A | 06-10-2010 |
| | | EP 2058340 A1 | 13-05-2009 |
| | | EP 2220133 A1 | 25-08-2010 |
| | | US 2010292410 A1 | 18-11-2010 |
| | | WO 2009059780 A1 | 14-05-2009 |
| EP 2154195 A1 | 17-02-2010 | AT 494327 T | 15-01-2011 |
| | | EP 2154195 A1 | 17-02-2010 |
| | | ES 2358859 T3 | 16-05-2011 |
| EP 2368938 A1 | 28-09-2011 | EP 2368938 A1 | 28-09-2011 |
| | | WO 2011117102 A1 | 29-09-2011 |
| WO 2008148695 A1 | 11-12-2008 | EP 2000504 A1 | 10-12-2008 |
| | | EP 2014716 A1 | 14-01-2009 |
| | | WO 2008148693 A1 | 11-12-2008 |
| | | WO 2008148695 A1 | 11-12-2008 |
| EP 2423257 A1 | 29-02-2012 | EP 2423257 A1 | 29-02-2012 |
| | | WO 2012025584 A1 | 01-03-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2154195 A1
- EP 2048185 A1
- US 20220137860 A1
- US RE31331 E
- US 20110034634 A1
- EP 0491566 A1
- EP 0591224 A1
- EP 0887379 A
- WO 9212182 A
- WO 2004000899 A
- WO 2004111095 A
- WO 9924478 A
- WO 9924479 A
- WO 0068315 A
- WO 8707620 A
- WO 9219653 A
- WO 9219658 A
- EP 0491566 A